# EUROPÄISCHE PATENTSCHRIFT

(11) **EP 2 848 373 B1**
(45) Veröffentlichungstag und Bekanntmachung des Hinweises auf die Patenterteilung: **03.10.2018**
(21) Anmeldenummer: 14177731.8
(22) Anmeldetag: 18.07.2014
(51) Int. Cl.: B25H 1/00

(54) **Vorrichtung zur Handhabung von Werkzeugmaschinen**
Device for handling machine tools
Dispositif de manipulation de machines-outils

(30) Priorität: 16.09.2013 DE 102013218540
(43) Veröffentlichungstag der Anmeldung: 18.03.2015
(73) Patentinhaber: EB Agentur Energie & Umwelt GmbH, 74626 Bretzfeld-Dimbach (DE)
(72) Erfinder: Wurm, Markus, 74626 Bretzfeld - Dimbach (DE)
(74) Vertreter: Patent- und Rechtsanwälte Ullrich & Naumann

(56) Entgegenhaltungen:
- EP-A1- 2 394 785
- DE-U1-202006 005 365
- US-A- 3 915 241
- US-A1- 2013 156 518

## Beschreibung

Die vorliegende Erfindung betrifft eine Vorrichtung zur Handhabung von handgehaltenen Werkzeugmaschinen, bspw. zum Bohren, Kernbohren, Schleifen und/oder Fräsen.

Die Erfindung beschäftigt sich ganz allgemein mit einer Vorrichtung zur Handhabung von handgehaltenen Werkzeugmaschinen jeglicher Art. Dabei kann es sich beispielsweise um Werkzeugmaschinen zum Bohren, Kernbohren, Schleifen und/oder Fräsen von horizontalen und/oder vertikalen Löchern, Durchgängen, Schlitzen, Fugen etc. an Wänden, Decken o.ä. handeln.

Besonders problematisch bei der Handhabung von Werkzeugmaschinen zum Bohren, Kernbohren und/oder Fräsen ist in erster Linie das hohe Gewicht der Werkzeugmaschinen, das eine starke körperliche Belastung sowie ein Sicherheitsrisiko für die Bedienperson darstellt. Diese muss nämlich - auf dem Boden oder auf einer Leiter stehend - die schwere Werkzeugmaschine mit Muskelkraft anheben, an das zu bearbeitende Objekt ansetzen, während dem Bohren oder Fräsen halten und wieder absetzen. Die starke Körperliche Belastung hat nicht nur äußerst negative Auswirkungen auf die langfristige Gesundheit der Bedienperson, sondern auch auf die Arbeitsabläufe bzw. die Dauer, die die Werkzeugmaschine am Stück von einer Bedienperson aufgrund von Ermüdung benutzt werden kann. Die Werkzeugmaschine kann somit zeitlich nicht optimal ausgenutzt werden. Eine weitere Folge der hohen Belastung ist die eingeschränkte Stabilität und Präzision der Werkzeugmaschine. Auch die Umrüstung und die Veränderung der Position der Werkzeugmaschine sind äußerst umständlich und zeitaufwändig. Die Bedienperson muss nämlich die Werkzeugmaschine absetzen, in den meisten Fällen von der Leiter steigen, diese verschieben und wieder auf diese aufsteigen, und mit hohem Kraftaufwand die Werkzeugmaschine erneut anheben und ansetzen. In der Praxis wird sich damit beholfen, dass eine zweite Person der Bedienperson assistiert, sie beim Anheben, Absetzen und Umrüsten der Werkzeugmaschine unterstützt und die Werkzeugmaschine ggf. auffängt. Diese Lösung ist jedoch äußerst Personal- und damit Kostenintensiv. Die Arbeitsbelastung der Bedienperson sowie das Sicherheitsrisiko sind dennoch nicht zufriedenstellend.

In der Automobilindustrie ist bereits der Bedarf an das Bedienpersonal entlastenden Vorrichtungen erkannt. Die DE 189 27 314 A1 offenbart eine Montagehilfe für Überkopfarbeiten am Unterboden eines Kraftfahrzeuges für eine Arbeitshöhe, bei der ein Mensch nicht mehr aufrecht stehen kann. Die darin vorgeschlagene Ausführung einer Montagehilfe für Überkopfarbeiten an Kraftfahrzeugen hat neben dem Vorteil ihrer einfachen Herstellbarkeit auch den Vorzug, nahezu jede beliebige für die jeweilige Montagearbeit erforderliche Körperhaltung einzunehmen. Im Konkreten besteht die Montagehilfe aus einem auf Rädern roll- und lenkfähigen Wagen und einer Aufnahme für den Körper eines Monteurs. Die Aufnahme besteht aus einem Sitz mit vorzugsweise einer Lehne, wobei der Sitz mit dem roll- und lenkfähigen Waren höhenverstellbar verbunden ist. Die aus dem hohen Gewicht einer handhabbaren Werkzeugmaschine resultierenden Arbeitsbelastung und das damit einhergehende Sicherheitsrisiko können mit einer solchen Lösung jedoch nicht behoben werden.

EP 2 394 795 A1 zeigt einen gattungsbildenden Stand der Technik, wobei sich die Vorrichtung auf Rollen bewegen kann. Das Stativ dient ausschließlich zum Tragen einer Werkzeugmaschine. Ein das Werkzeug tragender Arm ist um eine Horizontal- und/oder Vertikalachse schwenkbar montiert, um den auf eine zu bearbeitende Fläche auszuübenden Druck zu steuern.

DE 20 2006 005 365 U1 zeigt eine handgehaltene Bohr-/Fräsmaschine, die werkzeugseitig eine Glocke zum Absaugen von Bohr- und Frässtaub umfasst. Die Glocke dient ausschließlich zum Absaugen und hat keine weitere Funktion.

DE 29 711 832 U1 zeigt für sich gesehen ein handhabungsgerät in Form eines Stativs, weiches zum Tragen einer Werkzeugmaschine geeignet ist.

US 2,766,012 A zeigt eine Bohrmaschine mit komplexem Stativ entsprechend dortiger Fig. 1.

US 2013/0156518 A1 zeigt für sich gesehen ein Stativ zum Überkopfbohren.

US 3,915,241 A zeigt eine Vorrichtung zur Handhabung von handgehaltenen Werkzeugmaschinen. Der vorliegenden Erfindung liegt daher die Aufgabe zugrunde, eine Vorrichtung anzugeben, die eine einfache und sichere Handhabung von Werkzeugmaschinen, insbesondere zum Bohren, Kernbohren und/oder Fräsen, ermöglicht.

Voranstehende Aufgabe ist erfindungsgemäß durch die Merkmale des Anspruchs 1 gelöst. Danach umfasst die Vorrichtung einen höhenverstellbaren Ständer, einen von dem Ständer getragenen maschinenspezifischen Adapter zur Aufnahme einer Werkzeugmaschine und eine den Ständer tragende Sockeleinheit, wobei der Adapter an dem der Sockeleinheit entgegengesetzten Ende des Ständers angeordnet ist und wobei ein Vorschub der Werkzeugmaschine in Richtung eines zu bearbeitenden Objekts, bspw. einer Wand, durch die Relativbewegung der Werkzeugmaschine und/oder der gesamten Vorrichtung erfolgt.

Des Weiteren ist wesentlich, dass die Sockeleinheit Laufräder oder Drehrollen aufweist oder in einer Schiene führbar ist. Bei Anlegen oder Eindringen eines Werkzeugs der Werkzeugmaschine in das zu bearbeitende Objekt erfolgt im Bereich des Werkzeugs das Absaugen einer das Werkzeug umgebenden Haube, wodurch ein Unterdruck entsteht, so dass der Vorschub der Werkzeugmaschine und der gesamten Vorrichtung durch den daraus resultierenden Sog begünstigt ist und der Vorschub nahezu ohne Kraftaufwand der Bedienperson erfolgt.

In erfindungsgemäßer Weise ist erkannt worden, dass es von ganz besonderem Vorteil ist, wenn eine Werkzeugmaschine von einer Vorrichtung getragen wird, die ein höhenverstellbaren Ständer, einen von dem Ständer getragenen maschinenspezifischen Adapter zur Aufnahme einer Werkzeugmaschine und eine den Ständer tragende Sockeleinheit umfasst. Im Gegensatz zum genannten Stand der Technik ist nicht etwa die Position der Bedienperson durch eine Vorrichtung veränderbar, sondern wird die Bedienperson dadurch entlastet, dass die Werkzeugmaschine von einer stativartigen Vorrichtung getragen und deren Position über die Vorrichtung veränderbar ist. Dabei ist der Adapter an dem der Sockeleinheit entgegengesetzten Ende angeordnet und so ausgeführt, dass er mit der Griffaufnahme handelsüblicher Werkzeugmaschinen kompatibel ist. Die Griffaufnahme dient nach abschrauben des Griffs der Werkzeugmaschine als Adapteraufnahme. Die Sockeleinheit ist idealerweise balkartig ausgebildet, um den Schwerpunkt der Vorrichtung in Bodennähe zu halten und ggf. Raum für weitere Funktionseinheiten zu bieten. Sie kann jedoch auch - ähnlich einem herkömmlichen Stativ - lediglich aus Füßen oder einem einfachen Sockel bestehen. Ein Vorschub der Werkzeugmaschine in Richtung des zu bearbeitenden Objekts, bspw. einer zu bearbeitenden Wand, erfolgt durch die Relativbewegung der Werkzeugmaschine und/oder der gesamten Vorrichtung. Aufgrund der durch die Vorrichtung erreichten Stabilität kann auf jegliche Befestigung an dem zu bearbeitenden Objekt verzichtet werden.

Des Weiteren ist für die erfindungsgemäße Lehre wesentlich, dass die Kombination der gesamten Anordnung auf Rädern, Rollen, etc. oder auf einer Schienenführung mit dem durch Absaugen entstehenden Unterdruck am Werkzeug beansprucht ist. Durch die Kombination der beiden Maßnahmen, d.h. durch den am Werkzeug entstehenden Sog, zieht sich das Werkzeug nahezu von selbst in die Wand oder dergleichen, so dass die Bedienperson einen nur noch geringen Kraftaufwand benötigt, um die gesamte Vorrichtung, die sich auf Rädern, Rollen oder dergleichen bewegt, zu führen.

Das hohe Gewicht der Werkzeugmaschine muss nunmehr nicht von der Bedienperson getragen werden. Diese muss lediglich die Werkzeugmaschine führen. Einer Beeinträchtigung der körperlichen Gesundheit der Bedienperson sowie einer kurzfristig raschen Ermüdung ist somit entgegengewirkt. Die Stabilität und die Präzision der Werkzeugmaschine sind durch die erfindungsgemäße Vorrichtung erheblich verbessert. Eine zweite helfende Person, die beim Anheben, Absetzen und Umrüsten der Werkzeugmaschine behilflich ist, kann nunmehr eingespart werden. Die Arbeitssicherheit ist insgesamt erheblich erhöht, die Arbeitsabläufe können optimiert und der Zeitaufwand verringert werden.

Folglich ist mit der erfindungsgemäßen Vorrichtung eine Vorrichtung realisiert, die eine einfache und sichere Handhabung von Werkzeugmaschinen, insbesondere zum Bohren, Kernbohren und/oder Fräsen, ermöglicht.

Erfindungsgemäß entsteht bei Anlegen und Eindringen eines Werkzeugs einer Werkzeugmaschine, insb. eines mit Holzylinder, in das zu bearbeitende Objekt im Bereich des Werkzeugs durch die Absaugung von Bohrstaub und/oder Schmiermittel ein Unterdruck. Der Vorschub der Werkzeugmaschine und/oder der gesamten Vorrichtung in Richtung des zu bearbeitenden Objekts ist durch den daraus resultierenden Sog begünstigt und erfolgt nahezu ohne Kraftaufwand der Bedienperson.

Vorzugsweise ist der Ständer der Vorrichtung zumindest bereichsweise stangenartige ausgebildet. Er kann aus einer oder mehreren ineinander gesteckten Stangen bestehen. Auch Aufsätze und Ansteckwerkstücke jeglicher Form und Art zur Erweiterung des Anwendungsbereichs sind denkbar. Diese können bspw. zwischen Ständer und Adapter gekoppelt werden.

Des Weiteren ist es vorteilhaft, wenn der Ständer derart geformt ist, dass das Werkzeug der Werkzeugmaschine in der Horizontalen ausreichend von der Vorrichtung, insbesondere von dessen Sockelelement, beabstandet ist, so dass ein Vorschub des Werkzeugs in und ggf. durch das zu bearbeitende Objekt möglich ist. Vorzugsweise weist der Ständer zwei Aussteifungen auf. Diese können beispielsweise durch mit Schweißnähten angebrachte Stahlplatten verstärkt sein.

Von besonderem Vorteil ist es, wenn der Ständer zumindest bereichsweise drehbar ausgeführt und/oder vertikal und/oder horizontal ausziehbar ist. Dadurch ist die Flexibilität und Anpassbarkeit der Vorrichtung erheblich erhöht, können nämlich Arbeiten an unebenen Objekten und/oder in unterschiedlichen Höhen vorgenommen werden. Vorzugsweise erfolgt die Drehung und/oder die Höhenverstellung stufenlos, beispielsweise durch eine teleskopartige Ausgestaltung des Ständers.

Um eine einfachere Bedienbarkeit der Vorrichtung zu realisieren, ist es von besonderem Vorteil, wenn die horizontale und/oder vertikale Position des Ständers manuell und/oder hydraulisch und/oder pneumatisch und/oder elektrisch einstellbar und eine Spindel und/oder eine Zylinder-Kolben-Einheit und/oder einen Motor zur Veränderung der Position über einen Betätigungsknopf, ein Pedal und/oder einen Hebel am Ständer und/oder am Sockelelement betätigbar ist. Denkbar ist eine Gestaltung ähnlich einem handelsüblichen Motorheber.

Des Weiteren ist es vorteilhaft, dass die horizontale und/oder vertikale Position des Ständers digital speicherbar und/oder regelbar und/oder wieder abrufbar und/oder herstellbar ist. Eine entsprechende elektronische Speichereinheit kann im und/oder am Ständer und/oder der Sockeleinheit angeordnet sein. Auch ist es denkbar die Bewegungen und Winkelmessungen mittels Sensortechnik nach zu verfolgen und durchzuführen.

In vorteilhafter Weise weist das Ständer eine Fixierung teleskopartiger Bestandteile und/oder Verlängerungen des Ständers und/oder von Aufsätzen auf. Dabei kann es sich um Klemm- und/oder Arretier- und/oder Schraubfixierungen handeln. Eine stufenlose Fixierung kann beispielsweise mittels Klemmkraft, vorzugsweise durch einen über ein Feststellrad oder -schraube befestigbaren und wieder lösbaren Hydraulikstempel, realisiert werden. Alternativ ist eine stufenweise Fixierung beispielsweise durch die Arretierung mittels eines Stifts denkbar.

Zur Erhöhung der Sicherheit ist es weiterhin vorteilhaft, dass der Ständer eine Ausfallsicherung aufweist. Dabei kann es sich um eine im Ständer angeordnete Hydrauliksicherung handeln.

Des Weiteren ist es vorteilhaft, wenn der Ständer zumindest bereichsweise Schläuche und/oder Kabel aufnimmt und/oder mindestens einen Schlauch- und/oder Kabelhalter/ -schlitz aufweist. Auf diese Weise können Schläuche und/oder Kabel der Werkzeugmaschine sicher verstaut und/oder befestigt werden und ein Stolpern über sowie eine erhöhte Abnutzung und Beschädigung von Schläuchen und/oder Kabeln verhindert werden.

Im Hinblick auf den Adapter ist es besonders vorteilhaft den Ständer und den Adapter derart auszugestalten, dass sie mittels einer Arretier- und/oder Klemm- und/oder Schraubfixierung miteinander verbindbar und wieder voneinander lösbar sind. Der maschinenspezifische Adapter weist an dem der Werkzeugmaschine zugewandten Ende in vorteilhafterweise einen Gewindestift auf, der mit der Gewindebohrung einer üblichen Griffaufnahme einer handelsüblichen Werkezugmaschine kompatibel ist. Schraubt man den Griff ab, wirkt die Griffaufnahme als Adapteraufnahme.

In weiter vorteilhafter Weise ist der Adapter durch mindestens ein Gelenk im Winkel gegenüber der Vorschubrichtung verstellbar. Dadurch kann abermals eine höhere Flexibilität und bessere Bedienbarkeit der Werkzeugmaschine erreicht werden.

Denkbar ist auch die Anordnung einer horizontalen und/oder vertikalen Wasserwaage an dem Adapter zur Verbesserung der Ausrichtung und Erhöhung der Präzision des Werkzeugs der Werkzeugmaschine. Eine Wasserwage ist auch - alternativ oder zusätzlich - am Ständer denkbar.

In weiter vorteilhafter Weise ist am Ständer und/oder am Adapter eine zum zu bearbeitenden Objekt ragende Schiebeeinrichtung zum Vorschub der Werkzeugmaschine angeordnet. Vorzugsweise handelt es sich hierbei beispielsweise um einen einfachen oder doppelten Schlitten, in dem sich die Werkzeugmaschine bewegen lässt. Dies eignet sich insbesondere bei schweren Werkzeugmaschinen.

In besonders raffinierter Weise lässt sich der Neigungswinkel der Schiebeeinrichtung relativ zu dem zu bearbeitenden Objekt verändern, so dass der Vorschub auch in einem zu dem zu bearbeitenden Objekt nicht orthogonalen Winkel erfolgen kann. Somit lassen sich beispielsweise schräge Bohrungen vornehmen.

Zur weiteren Erhöhung der Stabilität ist es denkbar am Ständer und/oder am Adapter mindestens ein Stützelement anzuordnen, das sich gegen das zu bearbeitende Objekt abstützt. Dabei kann es sich beispielsweise um zwei Stützarme jeweils rechts und links neben der Werkzeugmaschine handeln. Der Stützarm bzw. die Stützarme können am zu bearbeitenden Objekt nur anliegen oder an ihm befestigbar, beispielsweise verschraubbar, sein.

Um abgetragenes Material und/oder Schmiermittel aufzufangen und ggf. abzusaugen, ist eine vorzugsweise flexible und zurückziehbare Haube vorgesehen, die sich zumindest teilweise um das Werkzeug einer Werkzeugmaschine, beispielsweise um eine Bohrkrone, erstreckt. Die Haube kann aus Kunststoff hergestellt sein. Ebenfalls denkbar ist eine Haube aus Metall, die sich beispielsweise über Federspannung von dem zu bearbeitenden Objekt zurückdrängen lässt. Eine sich radial um das Werkzeug erstreckende Haube verstärkt den den Vorschub der Werkzeugmaschine begünstigenden Unterdruck bzw. Sog. Außerdem kann eine nahezu emissionsfreie Ausführung realisiert werden, beispielsweise durch die Ausführung der Haube in Form eines Faltenbalgs. Die Haube kann eine Öffnung aufweisen, um abgetragenes Material und/oder Schmiermittel abzuführen bzw. abzusaugen. Diese lässt sich am vorderen, dem zu bearbeitenden Objekt zugewandten Ende, mittig oder am hinteren, dem zu bearbeitenden Objekt abgewandten Ende anordnen. Somit kann alternativ oder zusätzlich zur Absaugung aus dem Inneren des Werkzeugs, beispielsweise dem Inneren der Bohrkrone über die Nabe, aus dem Außenbereich des Werkzeugs, d.h. zwischen Werkzeug und Haube, abgesaugt werden. Durch Absaugen des abgetragenen Materials und/oder Schmiermittels aus dem Inneren der Haube kann der Unterdruck und damit der Vorschub der Werkzeugmaschine abermals begünstigt werden.

Zur Erreichung einer guten Bedienbarkeit der Vorrichtung weist die Sockeleinheit Füße und/oder Rollen auf. Bei den Rollen kann es sich um roll- und lenkfähige Laufräder, Drehrollen o.ä. aus Gummi handeln. Der Vorschub der Werkzeugmaschine in Richtung des zu bearbeitenden Objekts wird durch Rollen erheblich erleichtert. Auch Schlitze und Fugen entlang einer Wand oder Decke sind mit Rollen einfacher zu bearbeiten.

Um eine Werkzeugmaschine parallel an einer Wand oder Decke zu bewegen, beispielsweise beim Fräsen von Schlitzen und Fugen, ist es besonders vorteilhaft, wenn die Sockeleinheit in einer Führungsschiene und/oder einem Schlitten führbar ist.

In vorteilhafter Weise umfasst die vorzugsweise balgförmige Sockeleinheit eine Absaugpumpe und/oder einen Absaugbehälter für abgetragenes Material und/oder Schmiermittel. Über einen unterdruckgeführten Absaugschlauch kann abgetragenes Material und/oder Schmiermittel aus einer sich zumindest teilweise um das Werkzeug der Werkzeugmaschine erstreckenden Haube und/oder aus der Werkzeugmaschine abgeleitet und in dem Absaugbehälter gesammelt werden. Eine zusätzliche Pump- und Sammelvorrichtung kann somit eingespart werden. Durch die Ausbildung einer balgartigen Sockeleinheit und die Anbringung weiterer Funktionseinheiten in die Sockeleinheit kann Raum eingespart, der Schwerpunkt der Vorrichtung abermals in Bodennähe verlagert und die Stabilität der Vorrichtung erhöht werden.

Die Stromversorgung der Vorrichtung und/oder der Werkzeugmaschine kann über eine Stromleitung vorzugsweise an der Sockeleinheit erfolgen. Diese kann - wie von Staubsaugern bekannt - einen Kabelaufroller zum sicheren Verstauen des Kabels aufweisen.

Zur Erreichung einer gewissen Stabilität und Robustheit der Vorrichtung ist/sind das Ständer und/oder der Adapter und/oder die Sockeleinheit aus robustem Material, vorzugsweise aus Stahl oder Aluminium, hergestellt. Vorzugsweise hält die Vorrichtung äußerst starken Belastungen stand und ist dennoch nicht zu schwer um sie einfach und sicher zu handhaben.

Zusammenfassend sei an dieser Stelle angemerkt, dass die erfindungsgemäße Vorrichtung ein neuartiges System zur Führung von Werkzeugmaschinen bietet, mit der die Arbeitssicherheit beträchtlich erhöht, die Arbeitsbelastung, der Zeit- und Energieaufwand erheblich reduziert und die Arbeitsabläufe optimiert werden. Sie eignet sich sowohl für die horizontale als auch für die vertikale Führung einer Werkzeugmaschine, beispielsweise an Wände und Decken.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert.

In der Zeichnung zeigt
- Fig. 1: in einer schematischen Seitenansicht ein Ausführungsbeispiel einer erfindungsgemäßen Vorrichtung zur Führung von Werkzeugmaschinen und
- Fig. 2: in einer schematischen Seitenansicht eine Vergrößerung des Abschnitts um den Adapter der Vorrichtung aus Fig. 1.

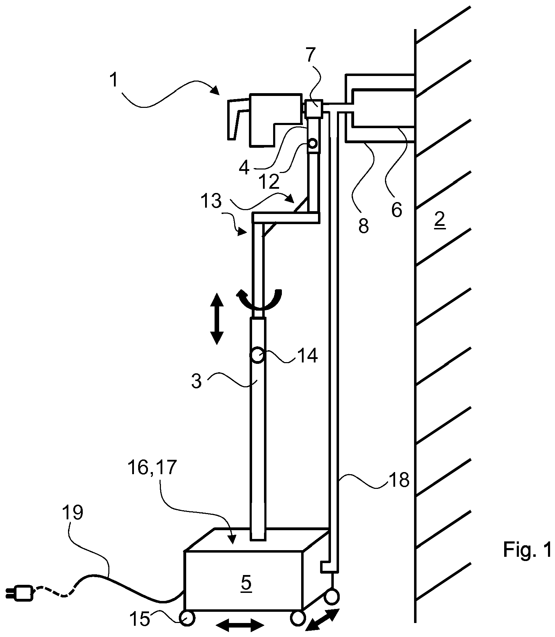

Fig. 1 zeigt im Konkreten ein Ausführungsbeispiel einer erfindungsgemäßen Vorrichtung zur einfachen und sicheren Führung einer Werkzeugmaschinen 1 und eine von der Vorrichtung getragene Werkzeugmaschine 1 zum Kernbohren, die an einer Wand 2 ansetzt.

Wesentlicher Bestandteil der Vorrichtung ist ein höhenverstellbarer Ständer 3, ein von dem Ständer 3 getragener Adapter 4 zur Aufnahme einer Werkzeugmaschine 1 und eine den Ständer tragende Sockeleinheit 5. Der Adapter 4 ist an dem der Sockeleinheit 5 entgegengesetzten Ende des Ständers 3 angeordnet.

Bei der Werkzeugmaschine 1 handelt es sich um eine handelsübliche Werkzeugmaschine 1 zum Kernbohren. Die hohlzylindrische Bohrkrone 6 liegt mit ihrem offenen Ende an der zu bearbeitenden Wand 2 an. Durch Anlegen der Bohrkrone 6 an und eindringen in die Wand 2 entsteht durch Absaugung zwischen Bohrkrone 6 und Wand 2 ein Unterdruck. Der daraus resultierende Sog begünstigt den Vorschub der Werkzeugmaschine 1 bzw. der gesamten Vorrichtung. Um die Bohrkrone 6 ist eine flexible und zurückziehbare Haube 7 aus Kunststoff angebracht, die sich radial um die Bohrkrone 6 erstreckt und das abgetragene Material sowie Schmiermittel nahezu emissionsfrei auffängt. Durch die Haube 7 ist der Sog und damit der Vorschub der Werkzeugmaschine 1 abermals begünstigt.

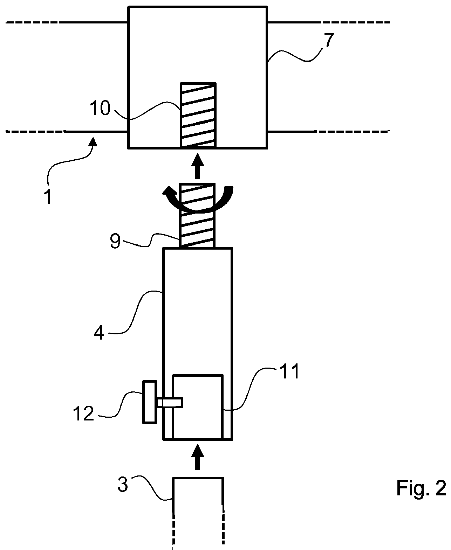

Eine Vergrößerung des Bereichs um den Adapter zeigt Fig. 2. Die Werkzeugmaschine 1 ist über deren Adapteraufnahme 7 mit dem maschinenspezifischen Adapter 4 verbunden. Der Adapter 4 weist einen Gewindestift 9 auf, der sich in die Gewindebohrung 10 der Adapteraufnahme 7 einschrauben lässt. Der Adapter 4 nimmt mit seiner Ständeraufnahme 11, hier eine einfache Aufnahmebohrung, das obere Ende des Ständers 3 auf und ist mit einer Feststellschraube 12 am Ständer 3 fixierbar und wieder lösbar.

Wie in Fig. 1 gezeigt, ist der Ständer 3 stangenartig ausgeführt und weist zwei Aussteifungen 13 auf, die durch Stahlplatten im inneren der Aussteifungen 13 stabilisiert sind. Der Ständer 3 ist derart bemessen, dass das Werkzeug 6 der Werkzeugmaschine 1 in der Horizontalen ausreichend weit von der Sockeleinheit 5 beabstandet ist und ausreichend in die Wand 2 eindringen kann. Des Weiteren ist der Ständer 3 unterhalb der Aussteifungen 13 teleskopartig ausziehbar und lässt sich mittels einer einen Hydraulikstempel betätigenden Feststellschraube 14 fixieren. Ferner ist der Ständer 3 im oberen teleskopartig ausziehbaren Bereich drehbar ausgeführt, was in Fig. 1 durch einen Pfeil symbolisiert ist. Das Prinzip des Ständers 3 ist ähnlich einem handelsüblichen Motorheber ausgeführt. Seine vertikale Position ist manuell über eine Zylinder-Kolben-Einheit mittels eines in der Fig. 1 nicht gezeigten Pedals an der Sockeleinheit 5 betätigbar.

Die Sockeleinheit 5 ist balgartig ausgebildet und umfasst vier fixierbare Drehrollen 15, die eine horizontale Bewegung in alle Richtungen ermöglichen (siehe Pfeile in Fig. 1) und den Vorschub der Werkzeugmaschine 1 erleichtern. Die Sockeleinheit 5 umfasst im Inneren eine Absaugpumpe 16 sowie einen Absaugbehälter 17. Über einen unterdruckgeführten Absaugschlauch 18 zwischen der Werkzeugmaschine 1 und der Sockeleinheit 5 wird abgetragenes Material von der Werkzeugmaschine 1, bzw. von der Bohrkrone 6 und der Haube 8, abgeführt und in den Absaugbehälter 17 geführt. Die Sockeleinheit 5 umfasst des Weiteren eine Stromleitung 19, über die die Stromversorgung der Vorrichtung und der Werkzeugmaschine erfolgt.

Die gesamte Vorrichtung, d.h. Ständer 3, Adapter 4 und Sockeleinheit 5, sind aus Stahl hergestellt.

Zur Vermeidung von Wiederholungen sei in Bezug auf Merkmale, die sich den Figuren nicht entnehmen lassen, auf den allgemeinen Teil der Beschreibung verwiesen.

Schließlich sei angemerkt, dass das voranstehend beschriebene Ausführungsbeispiel lediglich zur beispielhaften Erörterung der beanspruchten Lehre dient, diese jedoch nicht auf das Ausführungsbeispiel einschränkt.

## Patentansprüche

1. Vorrichtung zur Handhabung von handgehaltenen Werkzeugmaschinen (1), beispielsweise zum Bohren, Kernbohren und/oder Fräsen, mit einem höhenverstellbaren Ständer (3), einem von dem Ständer (3) getragenen maschinenspezifischen Adapter (4) zur Aufnahme einer Werkzeugmaschine (1) und einer den Ständer (3) tragenden Sockeleinheit (5), wobei der Adapter (4) an dem der Sockeleinheit (5) entgegengesetzten Ende des Ständers (3) angeordnet ist, wobei ein Vorschub der Werkzeugmaschine (1) in Richtung eines zu bearbeitenden Objekts (2), beispielsweise einer Wand, durch die Relativbewegung der Werkzeugmaschine (1) und/oder der gesamten Vorrichtung erfolgt, wobei die Sockeleinheit (5) Laufräder oder Drehrollen aufweist oder in einer Schiene führbar ist, **dadurch gekennzeichnet, dass** bei Anlegen und Eindringen eines. Werkzeugs (6) der Werkzeugmaschine (1) in das zu bearbeitenden Objekt (2) im Bereich des Werkzeugs (6) durch Absaugen einer das Werkzeug (6) umgebenden Haube (8) ein Unterdruck entsteht, so dass der Vorschub der Werkzeugmaschine (1) und der gesamten Vorrichtung durch den daraus resultierenden Sog begünstigt ist und der Vorschub nahezu ohne Kraftaufwand der Bedienperson erfolgt.

2. Vorrichtung nach Anspruch 1, **dadurch gekennzeichnet, dass** der Ständer (3) zumindest bereichsweise stangenartig ausgebildet und/oder zumindest bereichsweise drehbar ausgeführt und/oder vertikal und/oder horizontal ausziehbar ist.

3. Vorrichtung nach einem der Ansprüche 1 oder 2, **dadurch gekennzeichnet, dass** der Ständer (3) derart geformt ist, nämlich vorzugsweise zwei Aussteifungen (13) aufweist, dass das Werkzeug (6) der Werkzeugmaschine (1) in der Horizontalen ausreichend von der Vorrichtung, insbesondere vom Sockelelement (5), beabstandet ist, so dass es in und ggf. durch das zu bearbeitende Objekt (2) vorschiebbar ist.

4. Vorrichtung nach einem der Ansprüche 1 bis 3, **dadurch gekennzeichnet, dass** die horizontale und/oder vertikale Position des Ständers (3) manuell und/oder hydraulisch und/oder pneumatisch und/oder elektrisch einstellbar und/oder digital speicherbar und/oder abrufbar und/oder regelbar ist, wobei eine Spindel und/oder eine Zylinder-Kolben-Einheit und/oder ein Motor zur Veränderung der Position über einen Betätigungsknopf, ein Pedal und/oder einen Hebel am Ständer (3) und/oder am Sockelelement (5) betätigbar sein kann.

5. Vorrichtung nach einem der Ansprüche 1 bis 4, **dadurch gekennzeichnet, dass** der Ständer (3) eine Fixierung (14) mittels Klemmkraft, vorzugsweise durch einen Hydraulikstempel, aufweist und/oder dass der Ständer (3) eine Ausfallsicherung, vorzugsweise eine Hydrauliksicherung, aufweist.

6. Vorrichtung nach einem der Ansprüche 1 bis 5, **dadurch gekennzeichnet, dass** der Ständer (3) zumindest bereichsweise Schläuche und/oder Kabel aufnimmt und/oder mindestens einen Schlauch- und/oder Kabelhalter aufweist.

7. Vorrichtung nach einem der Ansprüche 1 bis 6, **dadurch gekennzeichnet, dass** der Ständer (3) und der Adapter (4) mittels einer Arretier- und/oder Klemm- und/oder Schraubverbindung, vorzugsweise mit einer Feststellschraube (12), miteinander koppelbar und wieder voneinander lösbar sind.

8. Vorrichtung nach einem der Ansprüche 1 und 7, **dadurch gekennzeichnet, dass** der Adapter (4) durch mindestens ein Gelenk im Winkel gegenüber der Vorschubrichtung verstellbar ist und ggf. eine Wasserwage aufweist.

9. Vorrichtung nach einem der Ansprüche 1 bis 8, **dadurch gekennzeichnet, dass** am Ständer (3) und/oder am Adapter (4) eine Schiebeeinrichtung, vorzugsweise ein Schlitten, zum Vorschub der Werkzeugmaschine (1) angeordnet ist, wobei sich die Schiebeeinrichtung vorzugsweise derart neigen lässt, dass der Vorschub in einem zu dem zu bearbeitenden Objekt (2) schrägen, nicht orthogonalen Winkel erfolgt.

10. Vorrichtung nach einem der Ansprüche 1 bis 9, **dadurch gekennzeichnet, dass** am Ständer (3) und/oder am Adapter (4) mindestens ein Stützelement angeordnet ist, das sich gegen das zu bearbeitende Objekt (2) abstützt.

11. Vorrichtung nach einem der Ansprüche 1 bis 10, **dadurch gekennzeichnet, dass** eine vorzugsweise flexible und zurückziehbare Haube (8) vorgesehen ist, die sich zumindest teilweise um das Werkzeug (6) der Werkzeugmaschine (1) erstreckt und abgetragenes Material und/oder Schmiermittel auffängt.

12. Vorrichtung nach einem der Ansprüche 1 bis 11, **dadurch gekennzeichnet, dass** die Sockeleinheit (5) eine Absaugpumpe (16) und/oder einen Absaugbehälter (17) umfasst.

13. Vorrichtung nach einem der Ansprüche 1 bis 12, **dadurch gekennzeichnet, dass** die Stromversorgung der Vorrichtung über eine Stromleitung (19) vorzugsweise an der Sockeleinheit (5) erfolgt.

## Claims

1. Device for handling hand-held machine tools (1), for example, for drilling, core drilling and/or milling, having a height-adjustable stand (3), a machine-specific adapter (4) which is carried by the stand (3) for receiving a machine tool (1) and a base unit (5) which carries the stand (3), wherein the adapter (4) is arranged at an end of the stand (3) opposite the base unit (5), wherein an advance of the machine tool (1) is carried out in the direction of an object (2) which is intended to be processed, for example a wall, by the relative movement of the machine tool (1) and/or the entire device, wherein the base unit (5) has running wheels or rotary rollers or can be guided in a rail, **characterised in that**, when a tool (6) of the machine tool (1) is applied and penetrates the object (2) to be processed in the region of the tool (6), as a result of suction of a hood (8) which surrounds the tool (6) a reduced pressure is produced so that the advance of the machine tool (1) and the entire device is promoted as a result of the resulting suction and the advance is carried out almost without any application of force by the operator.

2. Device according to claim 1, **characterised in that** the stand (3) is constructed at least partially in the form of a rod and/or is constructed at least partially rotatably and/or can be extended vertically and/or horizontally.

3. Device according to either claim 1 or claim 2, **characterised in that** the stand (3) is formed in such a manner, that is to say, preferably has two reinforcements (13), that the tool (6) of the machine tool (1) is sufficiently spaced apart in the horizontal from the device, in particular from the base element (5), that it can be pushed forward in and where applicable through the object (2) to be processed.

4. Device according to any one of claims 1 to 3, **characterised in that** the horizontal and/or vertical position of the stand (3) can be manually and/or hydraulically and/or pneumatically and/or electrically adjusted and/or digitally stored and/or retrieved and/or controlled, wherein a spindle and/or a cylinder/piston unit and/or a motor for changing the position can be able to be actuated by means of an actuation button, a pedal and/or a lever on the stand (3) and/or on the base element (5).

5. Device according to any one of claims 1 to 4, **characterised in that** the stand (3) has a fixing (14) by means of clamping force, preferably by means of a hydraulic stamp and/or **in that** the stand (3) has a failure protection means, preferably a hydraulic protection means.

6. Device according to any one of claims 1 to 5, **characterised in that** the stand (3) at least partially receives hoses and/or cables and/or has at least one hose and/or cable retention member.

7. Device according to any one of claims 1 to 6, **characterised in that** the stand (3) and the adapter (4) can be coupled to each other and released from each other again by means of a locking and/or clamping and/or screw connection, preferably with a fixing screw (12).

8. Device according to either of claims 1 and 7, **characterised in that** the adapter (4) can be adjusted by means of at least one joint at an angle with respect to the advance direction and where applicable has a spirit level.

9. Device according to any one of claims 1 to 8, **characterised in that** a sliding device, preferably a carriage, for advancing the machine tool (1) is arranged on the stand (3) and/or on the adapter (4), wherein the sliding device can preferably be inclined in such a manner that the advance is carried out at an oblique, non-orthogonal angle relative to the object (2) to be processed.

10. Device according to any one of claims 1 to 9, **characterised in that** on the stand (3) and/or on the adapter (4) there is/are arranged at least one support element which is supported against the object (2) to be processed.

11. Device according to any one of claims 1 to 10, **characterised in that** there is provided a preferably flexible and retractable hood (8) which at least partially extends around the tool (6) of the machine tool (1) and which catches removed material and/or lubricant.

12. Device according to any one of claims 1 to 11, **characterised in that** the base unit (5) comprises a suction pump (16) and/or a suction container (17).

13. Device according to any one of claims 1 to 12, **characterised in that** the electric power supply of the device is carried out by means of a power line (19), preferably on the base unit (5).

## Revendications

1. Dispositif de manipulation de machines-outils (1) portatives, par exemple pour le perçage, le carottage et/ou le fraisage, avec un support réglable en hauteur (3), un adaptateur (4) spécifique à la machine, porté par le support (3), pour le logement d'une machine -outil (1) et une unité de socle (5) portant le support (3), l'adaptateur (4) étant disposé sur l'extrémité du support (3) opposée à l'unité de socle (5), une avance de la machine-outil (1) en direction d'un objet à usiner (2), par exemple d'une paroi, ayant lieu grâce au mouvement relatif de la machine-outil (1) et/ou de l'ensemble du dispositif, l'unité de socle (5) comprenant des roues ou des rouleaux ou pouvant être guidée dans un rail, **caractérisé en ce que**, lors de l'appui ou de la pénétration d'un outil (6) de la machine-outil (1) dans l'objet à usiner (2), une dépression apparaît au niveau de l'outil (6) du fait de l'aspiration d'un capot (8) entourant l'outil (6), de façon à ce que l'avance de la machine-outil (1) et de l'ensemble du dispositif soit favorisée par la succion qui en résulte et à ce que l'avant ait lieu presque sans effort de l'opérateur.

2. Dispositif selon la revendication 1, **caractérisé en ce que** le support (3) est conçu, au moins à certains endroits, sous la forme d'une tige, et/ou est conçu de manière rotative, au moins à certains endroits et/ou est extensible verticalement et/ou horizontalement.

3. Dispositif selon l'une des revendications 1 ou 2, **caractérisé en ce que** le support (3) présente une forme, de préférence comprend deux renforts (13), de façon à ce que l'outil (6) de la machine-outil (1) soit suffisamment écarté horizontalement du dispositif, plus particulièrement de l'élément de socle (5), pour qu'il puisse avancer dans et, le cas échéant, à travers l'objet à usiner (2).

4. Dispositif selon l'une des revendications 1 à 3, **caractérisé en ce que** la position horizontale et/ou verticale du support (3) est réglable manuellement et/ou hydrauliquement et/ou pneumatiquement et/ou électriquement et/ou peut être enregistrée et/ou accédée et/ou régulée numériquement, une broche et/ou une unité cylindre-piston et/ou un moteur pouvant être actionné pour modifier la position par l'intermédiaire d'un bouton d'actionnement, d'une pédale et/ou d'un levier sur le support (3) et/ou sur l'élément de socle (5).

5. Dispositif selon l'une des revendications 1 à 4, **caractérisé en ce que** le support (3) comprend une fixation (14) à l'aide d'une force de serrage, de préférence par un poinçon hydraulique et/ou **en ce que** le support (3) comprend une sécurité anti-chute, de préférence une sécurité hydraulique.

6. Dispositif selon l'une des revendications 1 à 5, **caractérisé en ce que** le support (3) loge, au moins à certains endroits, des tuyaux et/ou des câbles et/ou au moins un support de tuyaux ou de câbles.

7. Dispositif selon l'une des revendications 1 à 6, **caractérisé en ce que** le support (3) et l'adaptateur (4) peuvent être couplés entre eux au moyen d'une liaison par blocage et/ou par serrage et/ou par vissage, de préférence avec une vis de fixation (12), et peuvent être détachés l'un de l'autre.

8. Dispositif selon l'une des revendications 1 à 7, **caractérisé en ce que** l'adaptateur (4) est réglable à l'aide d'au moins une articulation avec un angle par rapport à la direction d'avance et, le cas échéant, comprend un niveau à bulle.

9. Dispositif selon l'une des revendications 1 à 8, **caractérisé en ce que**, sur le support (3) et/ou sur l'adaptateur (4), est disposé un dispositif de poussée, de préférence un chariot, pour l'avance de la machine-outil (1), le dispositif de poussée pouvant de préférence être incliné de façon à ce que l'avance ait lieu à un angle oblique non orthogonal par rapport à l'objet à usiner (2).

10. Dispositif selon l'une des revendications 1 à 9, **caractérisé en ce que**, sur le support (3) et/ou sur l'adaptateur (4), est disposé au moins un élément d'appui qui s'appuie contre l'objet à usiner (2).

11. Dispositif selon l'une des revendications 1 à 10, **caractérisé en ce qu'**un capot (8) de préférence flexible et rétractable, est prévu, qui s'étend au moins partiellement autour de l'outil (6) de la machine-outil (1) et qui collecte le matériau enlevé et/ou le lubrifiant.

12. Dispositif selon l'une des revendications 1 à 11, **caractérisé en ce que** l'unité de socle (5) comprend une pompe d'aspiration (16) et/ou un récipient d'aspiration (17).

13. Dispositif selon l'une des revendications 1 à 12, **caractérisé en ce que** l'alimentation électrique du dispositif a lieu par l'intermédiaire d'une conduite électrique (19), de préférence au niveau de l'unité de socle (5).
